# EUROPEAN PATENT SPECIFICATION

(11) **EP 3 156 706 B1**
(45) Date of publication and mention of the grant of the patent: **11.04.2018**
(21) Application number: 15189700.6
(22) Date of filing: 14.10.2015
(51) Int. Cl.: F16K 31/60

(54) **VALVE ATTACHMENT AND VALVE ARRANGEMENT**
VENTILAUFSATZ UND VENTILANORDNUNG
AGENCEMENT ET FIXATION DE SOUPAPE

(43) Date of publication of application: 19.04.2017
(73) Proprietor: Danfoss A/S, 6430 Nordborg (DK)
(72) Inventor: Størner, David, 7200 Grindsted (DK)
(74) Representative: Knoblauch, Andreas

(56) References cited:
- DE-A1-102009 011 406
- DE-B4-102008 012 148
- US-A1- 2012 152 367

## Description

The invention relates to a valve attachment that is attachable to a valve to adjust a flow through the valve, wherein the valve attachment comprises a housing as well as a valve adapter, wherein the valve adapter facilitates a connection of the housing to the valve, wherein the housing is axially displaceable relative to the valve adapter during installation of the valve attachment to the valve, and wherein the housing can be fixed to the valve adapter in a plurality of relative axial positions.

The invention furthermore relates to a valve arrangement comprising a valve attachment of the above kind as well as a valve onto which the valve attachment is attached.

Valve attachments of the above kind are, for example, attached to valves of floor heating manifolds to adjust the flow through the valve and thereby adjust the amount of heat that the connected circuit dispenses. The valve attachment to this end needs to engage the valve, for example, a valve spindle that is connected to the valve element which opens or closes the valve. To facilitate the connection of the valve attachment to the valve, the valve usually comprises a connection geometry, for example a thread. However, since the valves as well as the valve attachments are produced by numerous different manufacturers and furthermore the valves are produced in different sizes, the connection geometries of the valves come in a large variety.

A valve attachment of the type mentioned above is, for example, known from DE 10 2008 012 148 B4. The valve adapter of the valve attachment in this case circumvents the connection geometry of the valve by engaging a valve housing or pipe. This has the advantage that the valve attachment may be used with a plurality of different valves.

However, the above solution has the disadvantage, that it becomes difficult to ensure an exact control of the valve by the valve attachment, since it is hard to confirm that the valve attachment is placed in the optimal position to engage the valve, and in particular a valve spindle. This problem is made worse by the fact that depending on the type of valve, in particular normally open valves or normally closed valves, it may in many cases be necessary to provide different types of valve attachments for each kind of valve.

For example, from DE 10 2009 011 406 A1 a further valve attachment is known. In this case the valve attachment uses a valve adapter that can be screwed onto a connection geometry of the valve to facilitate a connection of the housing to the valve. However, this solution has the disadvantage that for each kind of valve a different connection geometry has to be used. The valve attachment also includes an electronic calibration of the actuator to adapt to the stroke of the valve during operation. However, this solution is relatively expensive and requires an internal power source that needs to be replaced regularly. Furthermore, it may be desirable in some applications to allow a quick manual installation and calibration of the valve attachment.

The task of the present invention therefore is to provide a valve attachment that is easy to install and calibrate in a broad range of valve applications.

According to the invention the above task is solved in that the valve attachment comprises an indicator means that indicates when the indicator means abuts the valve and thus the correct relative axial position of the housing and the valve adapter is reached during installation.

With this solution the valve adapter can be first connected to the valve, for example, by a screw connection. The valve adapter can be chosen according to the measurements of the valve connection (e.g. M28, M30, Danfoss RA, Uponor M30 internal thread). Then the housing can be placed on the valve adapter and displaced axially relative to the valve adapter. To this end the housing can be fixed on the valve adapter in a plurality of relative axial positions. A correct relative position of the valve adapter and/or the housing in the context of this application means that an actuator of the valve attachment can actuate the valve over the full stroke of the valve element and/or the valve spindle. For example, if the distance of the housing to the valve is too small or too large, the full stroke of the valve cannot be controlled by the valve attachment and thus the valve cannot be fully opened or fully closed depending on whether the valve is a normally open or a normally closed valve. With the present invention however, the indicator means now indicates when a correct relative axial position of the housing and the valve adapter and/or the valve has been found during installation. The valve attachment can comprise an actuator, preferably a thermal wax actuator or an electric motor.

In a preferred embodiment an inspection means is arranged in the housing, wherein the inspection means allows to see from an outside of the housing if the indicator means abuts the valve or not. The inspection means may, for example, be an inspection hole and/or an inspection window. The inspection window may comprise a transparent section of a housing. Consequently, the indicator means can be partially visible through the inspection means depending on whether or not the indicator means abuts the valve. This allows for a relatively simple mechanical solution that does not require an electronic calibration of the valve attachment, but rather the person installing the valve attachment can visually confirm if the correct installation position of the valve attachment on the valve has been found.

Preferably, the indicator means comprises an indicator ring that allows to see through the inspection means if the indicator means abuts the valve or not. In this embodiment it is ensured that the indicator means can be observed through the inspection means depending on the relative axial position of the housing and the valve. Furthermore, the use of an indicator ring simplifies the assembly of the valve attachment, since it is not necessary to align the angular positions of the indicator means with the inspection means.

In a further preferred embodiment the indicator means comprises a baseplate to abut a valve spindle of the valve. This solution has the advantage that the baseplate allows to engage a large variety of different valve spindles.

In a further preferred embodiment the indicator means is visible through the inspection means until the indicator means disappears from the inspection means once the indicator means abuts the valve during installation of the valve attachment on the valve. This way, a part of the indicator means that is visible through the inspection means may be axially displaced away relative to the inspection means once the indicator means abuts the valve. This allows for a relatively simple mechanical solution for indicating the correct installation position.

In an alternative embodiment the indicator means appears in the inspection means once the indicator means abuts the valve during installation of the valve attachment on the valve.

It is preferred if the valve attachment comprises a locking mechanism, that facilitates a locking of the relative axial position of the housing and the valve adapter. During installation the housing may be displaced relative to the valve adapter and takes temporarily in a plurality of relative positions. This may for example be realized by a snap-in profile between the valve adapter and the housing. Once the correct installation position has been found, the locking mechanism facilitates a locking of the relative position of the valve adapter and the housing.

It is furthermore preferred if the locking mechanism comprises a snap ring. In this case the snap ring may be placed on the housing and/or the valve adapter once the desired relative position of the valve adapter and the housing has been found to facilitate a locking of the relative position. A snap ring is relatively easy to install and can be provided in a plurality of diameters or geometries according to the used valve adapter. Alternatively, the snap ring can be placed on the valve adapter and/or the housing already during installation. In this case the snap ring can allow a relative displacement of valve adapter and housing only in one direction. The latter can be facilitated by the snap ring comprising locking profiles, in particular with an asymmetric cross-section in the axial direction.

It is furthermore preferred if the valve adapter comprises one adapter connection on each axial end of the valve adapter. The adapter connections may be chosen from a plurality of different geometries, for example M28, M30, Danfoss RA or Uponor M30 internal thread. The valve attachment may be provided with a plurality of valve adapters, each with at least one different adapter connection compared to the other valve adapters.

It is furthermore preferred when the two adapter connections have a different connection geometry. This way, one may limit the number of necessary valve adapters to allow an installation of the valve attachment on all desired valve types. For example, a given valve adapter may on one end comprise a M28 adapter connection and on the opposite end an M30 adapter connection. When the valve attachment is installed one may then only use one of the two connection geometries to attach the valve adapter to the valve.

It is furthermore preferred if the valve attachment comprises snap-in profiles on both the valve adapter and the housing to facilitate a fixing of the housing to the valve adapter in a plurality of relative axial positions. Snap-in profiles between the housing and the valve adapter are a relatively simple way of temporarily fixing the relative position. Only a relatively small force is necessary to move the housing relative to the valve adapter from one position to the next.

It is preferred if the locking mechanism engages at least one of the snap-in profiles to lock the relative axial position of the housing and the valve adapter. The locking mechanism may to this end comprise locking profiles that can engage at least one of the snap-in profiles. The locking mechanism may, for example, engage into a snap-in profile of the valve adapter and at the same time block a relative axial movement of the housing or the other way around. Locking may either mean a blocking of a relative axial movement in one direction or in both.

The above task is also solved by a valve arrangement comprising a valve attachment according to any of the above embodiments as well as a valve onto which the valve attachment is attached.

Preferred embodiments of the invention will now be described with reference to the figures, wherein:
- Fig. 1+2: show a first embodiment of a valve attachment according to the invention during installation on a valve,
- Fig. 3: shows a second embodiment according to the invention,
- Fig. 4: shows a valve adapter after installation on a valve,
- Fig. 5: shows a valve adapter according to the invention,
- Fig. 6: shows an indicator means according to the invention,
- Fig. 7+8: show a locking mechanism according to the invention,
- Fig. 9: shows a valve attachment according to the invention in an external view.

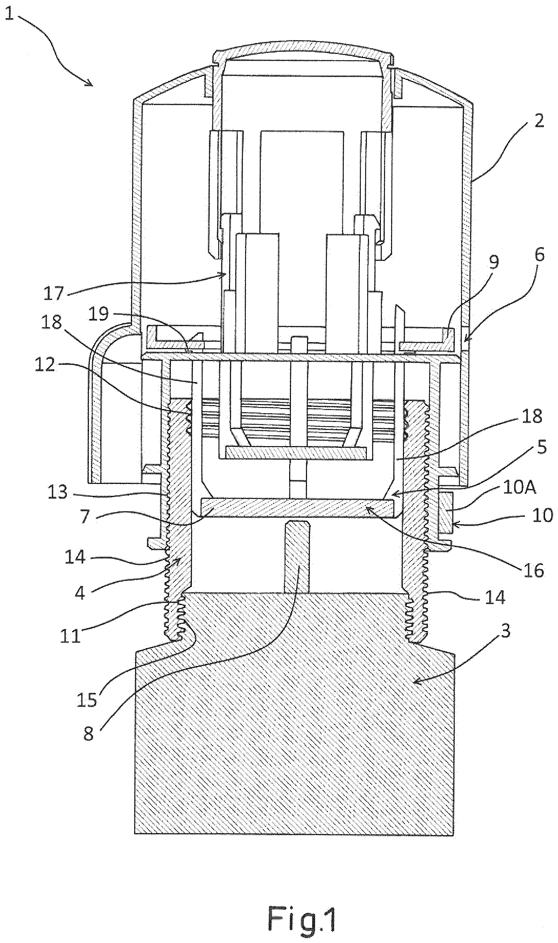

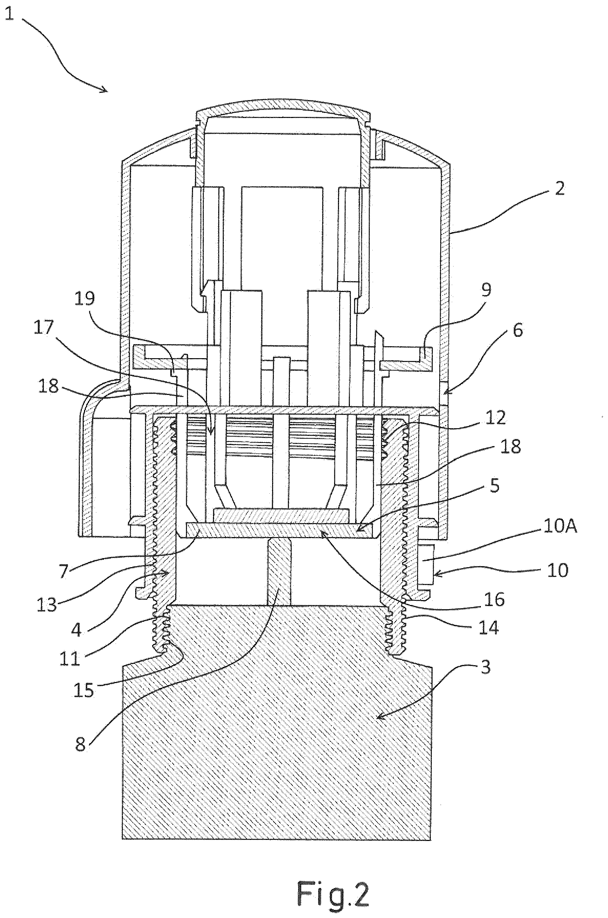

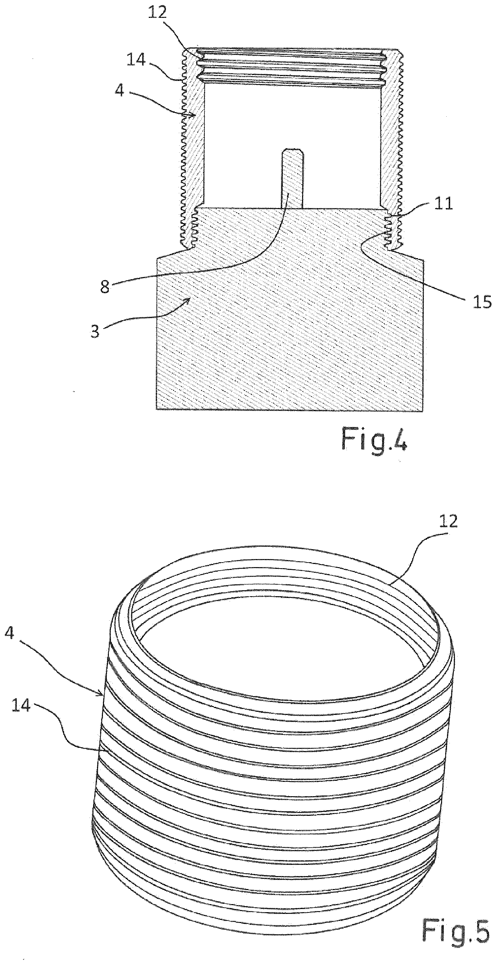

Fig. 1 and 2 show a first embodiment of a valve attachment 1 according to the invention. The valve attachment 1 comprises a housing 2 in which the actuator is arranged. The actuator is omitted in the figures for simplicity, but it may comprise an electric motor and/or a thermal wax actuator. The valve attachment 1 is installed on a valve 3. Fig. 1 shows a situation during installation before the correct relative position of the housing 2 to a valve adapter 4 and/or the valve 3 has been found. The valve adapter 4 is first attached to the valve 3, for example by a screw connection (e.g. an M28, an M30 or an Uponor M30 internal thread connection) or by a snap-in connection (for example Danfoss RA). The valve adapter 4 here comprises one adapter connection 11, 12 on each axial end of the valve adapter 4. In this case only the adapter connection 11 is used to facilitate a connection to the valve 3. The valve adapter 4 can also be seen in more detail in Fig. 4 and 5.

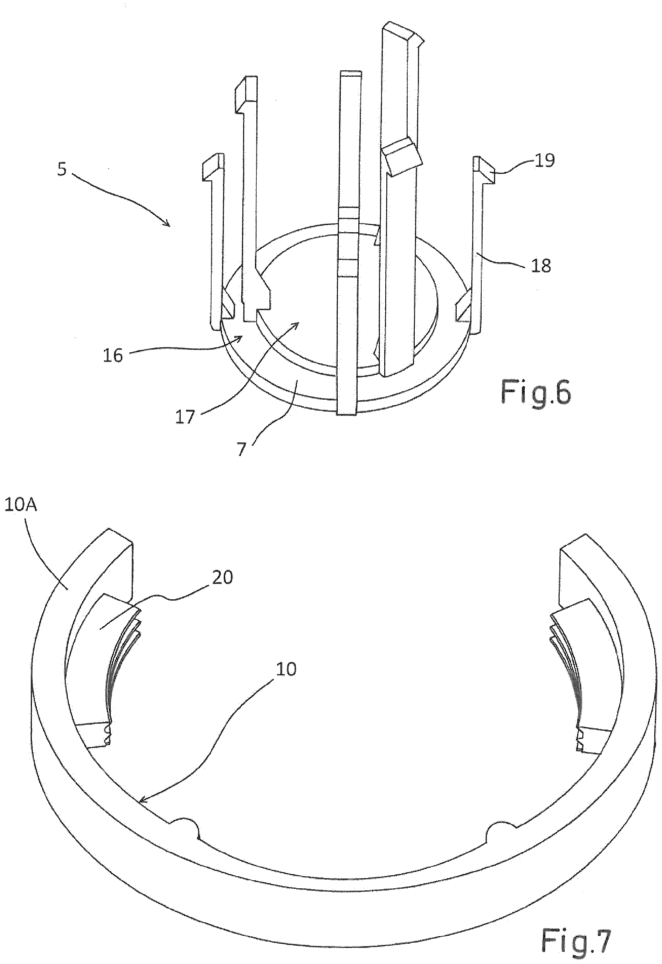

As can be seen in Fig. 1 the valve 3 comprises a valve spindle 8 that is connected to a valve element inside the valve 3 which is not shown for simplicity other details of the valve 3 are also omitted. In order to actuate the valve 3 the valve attachment 1 needs to engage the valve spindle 8 to displace the valve spindle 8 and the valve element. Since there are numerous different types of valves as well as valve connections 15, it is difficult to provide a valve attachment that can be operated with a large number of different valves. In particular, one needs to ensure that the complete stroke of the valve spindle 8 can be operated by the actuator of the valve attachment 1. To this end, the valve attachment 1 comprises an indicator means 5, comprising two indicator spindles 16, 17. The indicator means 5 can be seen in more detail in Fig. 6. The indicator spindle 16 is axially displaceable relative to the housing 2. Once the indicator means 5 engages the valve spindle 8 the indicator means 5 and in particular the indicator spindle 16 is displaced relative to the housing 2. Thereby, the indicator means 5 disappears from an inspection hole 6 in the housing 2. Alternatively, an inspection window may be used instead of an inspection hole. The inspection window may comprise a transparent section of the housing 2. The indicator means disappearing from the inspection hole 6 can be seen by comparing Fig. 1 and 2, wherein Fig. 1 shows the situation before the housing 2 has reached the correct installation position of the valve attachment 1 relative to the valve 3. In Fig. 2 the housing 2 has moved downwards relative to the valve adapter 4 and the valve 3 whereby the indicator means 5 abuts the valve spindle 8 and an indicator ring 9 disappears from the inspection hole 6 as seen from an outside. This indicates to the person installing the valve attachment 1 that the correct installation position has been found.

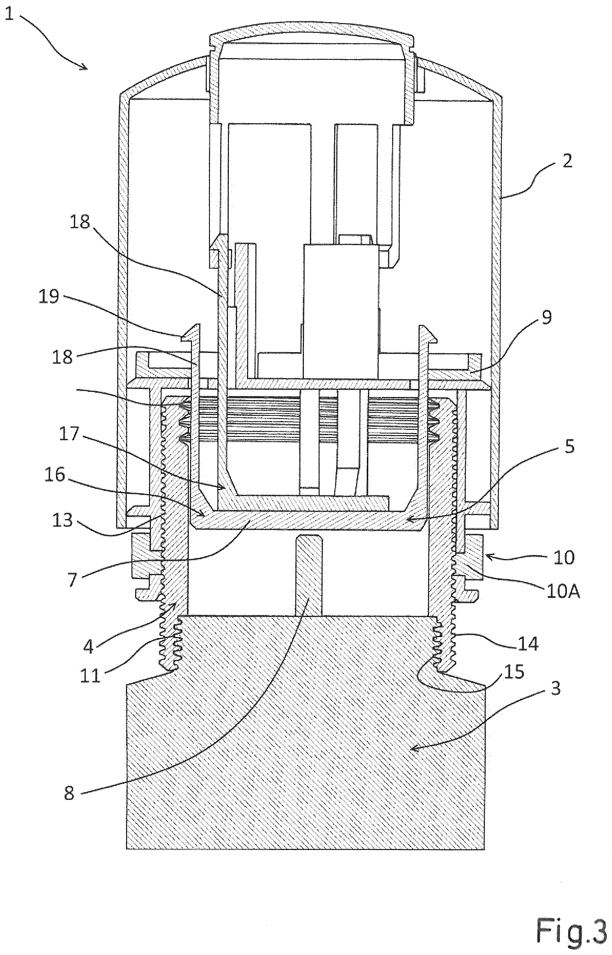

Fig. 3 shows a different embodiment in which the indicator means only becomes visible through the inspection means, here the inspection hole 6, once the correct relative axial position of the housing 3 and the valve 2 is reached during installation. Fig. 3 shows a rotated view compared to Fig. 1 and 2, which is why the inspection hole 6 is not visible. This different behavior of the indicator means 5 is achieved by the indicator spindle 16 comprising fingers 18 that can engage the indicator ring 9. The fingers 18 furthermore comprise radial protrusions 19 that can engage the indicator ring 9 from one face. In the embodiment according to Fig. 1 and 2 the protrusions 19 engage the indicator ring 9 from the bottom side and lift the indicator ring 9 upwards once the correct installation position has been reached, whereby the indicator means disappears from the inspection hole 6. In the embodiment according to Fig. 3 the protrusions 19 however engage the indicator ring 9 from the topside and displace the indicator ring 9 until it appears in the inspection hole 6 once the correct relative axial positions of the housing 2 and the valve 3 is reached during installation.

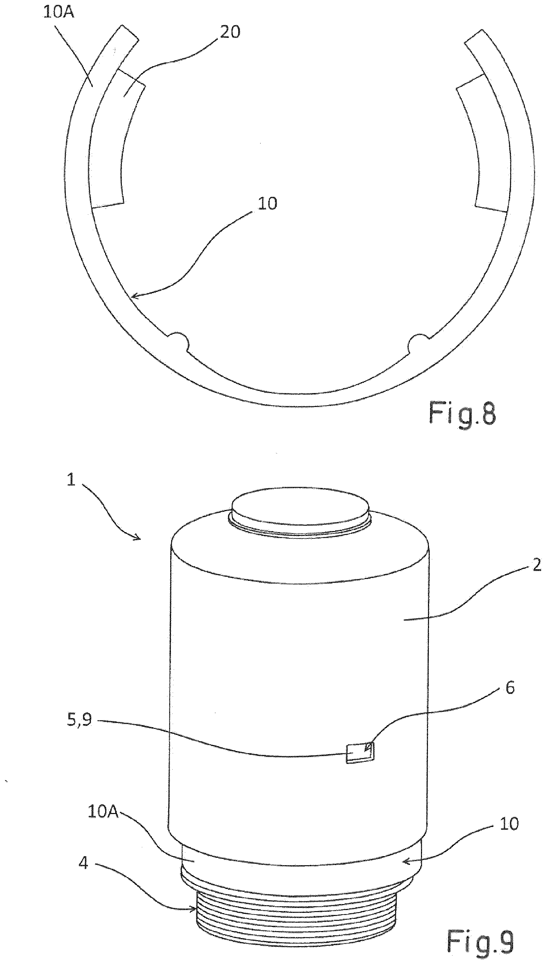

In Fig. 1 to 3 one may also see a locking mechanism 10 which comprises a snap ring 10A. The snap ring 10A can be seen in more detail in Fig. 7 and 8.

During installation the housing 2 is axially displaceable relative to the valve adapter 4. This is facilitated by snap-in profiles 13, 14 on both the valve adapter 4 and the housing 2. The housing 2 can therefore be temporarily fixed in a plurality of relative positions to the valve adapter 4 and/or the valve 3. Once the correct relative position of the housing 2 to the valve 3 has been found as indicated by the indicator means 5 the locking mechanism 10 is placed around the valve adapter 4 and the housing 2. This can be seen in detail in Fig. 3. The locking mechanism 10 here comprises two locking profiles 20 that engage the snap-in profile 14 of the valve adapter 4. At the same time the locking mechanism 10 prevents an axial movement of the housing 2 relative to the valve adapter 4 as can be seen in Fig. 3 once the locking mechanism 10 has been placed.

Fig. 9 shows an external view of the valve attachment 1 comprising the housing 2, the valve adapter 4 and the locking mechanism 10. One may also see the inspection hole 6 as well as the indicator means 5 that is visible through the inspection hole 6. Again, an inspection window may be used instead of the inspection hole 6.

## Claims

1. A valve attachment (1) that is attachable to a valve (3) to adjust a flow through the valve (3), wherein the valve attachment (1) comprises a housing (2) as well as a valve adapter (4), wherein the valve adapter (4) facilitates a connection of the housing (2) to the valve (3), wherein the housing (2) is axially displaceable relative to the valve adapter (4) during installation of the valve attachment (1) to the valve (3), and wherein the housing (2) can be fixed to the valve adapter (4) in a plurality of relative axial positions, **characterized in that**, the valve attachment (1) comprises an indicator means (5) that indicates when the indicator means abuts the valve (3) and thus a correct relative axial position of the housing (2) and the valve (3) is reached during installation.

2. The valve attachment (1) according to claim 1, **characterized in that**, an inspection means is arranged in the housing (2), wherein the inspection means allows to see from an outside of the housing (2) if the indicator means (5) abuts the valve (2) or not.

3. The valve attachment (1) according to claim 2, **characterized in that**, the indicator means (5) comprises an indicator ring (9) that allows to see through the inspection means if the indicator means (5) abuts the valve (3) or not.

4. The valve attachment (1) according to any of claims 1 to 3, **characterized in that**, the indicator means (5) comprises a baseplate (7) to abut a valve spindle (8) of the valve (3).

5. The valve attachment (1) according to any of claims 2 to 4, **characterized in that**, the indicator means (5) disappears from the inspection means once the indicator means (5) abuts the valve (3) during installation of the valve attachment (1) on the valve (3).

6. The valve attachment (1) according to any of claims 2 to 4, **characterized in that**, the indicator means (5) appears in the inspection means once the indicator means (5) abuts the valve (3) during installation of the valve attachment (1) on the valve (3).

7. The valve attachment (1) according to any of claims 1 to 6, **characterized in that**, the valve attachment (1) comprises a locking mechanism (10), that facilitates a locking of the relative axial position of the housing (2) to the valve adapter (4).

8. The valve attachment (1) according to claim 7, **characterized in that**, the locking mechanism (10) comprises a snap ring (10A).

9. The valve attachment (1) according to any of claims 1 to 8, **characterized in that**, the valve adapter (4) comprises one adapter connection (11, 12) on each axial end of the valve adapter (4).

10. The valve attachment (1) according to claim 9, **characterized in that**, the two adapter connections (11, 12) have a different connection geometry.

11. The valve attachment (1) according to any of claims 1 to 10, **characterized in that**, the valve attachment (1) comprises snap-in profiles (13, 14) on both the valve adapter (4) and the housing (2) to facilitate a fixing to the housing (2) to the valve adapter (4) in a plurality of relative axial positions.

12. The valve attachment (1) according to claim 11, **characterized in that**, the locking mechanism (10) engages at least one of the snap-in profiles (13, 14) to lock the relative axial position of the housing (2) and the valve adapter (4).

13. A valve arrangement comprising a valve attachment (1) according to any of claims 1 to 12, as well as a valve (2) onto which the valve attachment (1) is attached.

## Patentansprüche

1. Ventilaufsatz (1), der zwecks Einstellen eines Durchflusses durch ein Ventil (3) an dem Ventil (3) anbringbar ist, wobei der Ventilaufsatz (1) ein Gehäuse (2) sowie einen Ventiladapter (4) umfasst, wobei der Ventiladapter (4) eine Verbindung des Gehäuses (2) mit dem Ventil (3) ermöglicht, wobei das Gehäuse (2) bezogen auf den Ventiladapter (4) während der Befestigung des Ventilaufsatzes (1) an dem Ventil (3) axial verschiebbar ist, und wobei das Gehäuse (2) an dem Ventiladapter (4) in mehreren axialen Relativpositionen befestigt werden kann, **dadurch gekennzeichnet, dass** der Ventilaufsatz (1) ein Anzeigemittel (5) umfasst, das anzeigt, wann das Anzeigemittel an das Ventil (3) anstößt und somit eine korrekte axiale Relativposition des Gehäuses (2) und des Ventils (3) während der Befestigung erreicht ist.

2. Ventilaufsatz (1) nach Anspruch 1, **dadurch gekennzeichnet, dass** in dem Gehäuse (2) ein Kontrollmittel angeordnet ist, wobei das Kontrollmittel von außerhalb des Gehäuses (2) erkennen lässt, ob das Anzeigemittel (5) an das Ventil (2) anstößt oder nicht.

3. Ventilaufsatz (1) nach Anspruch 2, **dadurch gekennzeichnet, dass** das Anzeigemittel (5) einen Anzeigering (9) umfasst, der zulässt, dass durch das Kontrollmittel hindurch zu erkennen ist, ob das Anzeigemittel (5) an das Ventil (3) anstößt oder nicht.

4. Ventilaufsatz (1) nach einem der Ansprüche 1 bis 3, **dadurch gekennzeichnet, dass** das Anzeigemittel (5) eine Grundplatte (7) zum Anstoßen an eine Ventilspindel (8) des Ventils (3) umfasst.

5. Ventilaufsatz (1) nach einem der Ansprüche 2 bis 4, **dadurch gekennzeichnet, dass** das Anzeigemittel (5) aus dem Kontrollmittel verschwindet, sobald das Anzeigemittel (5) während der Befestigung des Ventilaufsatzes (1) auf dem Ventil (3) am Ventil (3) anstößt.

6. Ventilaufsatz (1) nach einem der Ansprüche 2 bis 4, **dadurch gekennzeichnet, dass** das Anzeigemittel (5) in dem Kontrollmittel erscheint, sobald das Anzeigemittel (5) während der Befestigung des Ventilaufsatzes (1) auf dem Ventil (3) am Ventil (3) anstößt.

7. Ventilaufsatz (1) nach einem der Ansprüche 1 bis 6, **dadurch gekennzeichnet, dass** der Ventilaufsatz (1) einen Arretiermechanismus (10) umfasst, der eine Arretierung der axialen Relativposition des Gehäuses (2) zum Ventiladapter (4) ermöglicht.

8. Ventilaufsatz (1) nach Anspruch 7, **dadurch gekennzeichnet, dass** der Arretiermechanismus (10) einen Sprengring (10A) umfasst.

9. Ventilaufsatz (1) nach einem der Ansprüche 1 bis 8, **dadurch gekennzeichnet, dass** der Ventiladapter (4) einen Adapteranschluss (11, 12) an jedem axialen Ende des Ventiladapters (4) umfasst.

10. Ventilaufsatz (1) nach Anspruch 9, **dadurch gekennzeichnet, dass** die beiden Adapteranschlüsse (11, 12) eine unterschiedliche Anschlussgeometrie aufweisen.

11. Ventilaufsatz (1) nach einem der Ansprüche 1 bis 10, **dadurch gekennzeichnet, dass** der Ventilaufsatz (1) Einrastprofile (13, 14) sowohl am Ventiladapter (4) als auch am Gehäuse (2) zum Ermöglichen einer Befestigung am Gehäuse (2) am Ventiladapter (4) in mehreren axialen Relativpositionen umfasst.

12. Ventilaufsatz (1) nach Anspruch 11, **dadurch gekennzeichnet, dass** der Arretiermechanismus (10) in mindestens eins der Einrastprofile (13, 14) eingreift und so die axiale Relativposition von Gehäuse (2) und Ventiladapter (4) arretiert.

13. Ventilanordnung, die einen Ventilaufsatz (1) nach einem der Ansprüche 1 bis 12 sowie ein Ventil (2) umfasst, auf dem der Ventilaufsatz (1) angebracht ist.

## Revendications

1. Fixation de soupape (1) qui peut être attachée à une soupape (3) afin de régler un écoulement à travers la soupape (3), dans laquelle la fixation de soupape (1) comprend un boîtier (2) ainsi qu'un adaptateur de soupape (4), dans laquelle l'adaptateur de soupape (4) facilite une connexion du boîtier (2) à la soupape (3), dans laquelle le boîtier (2) peut être déplacé axialement par rapport à l'adaptateur de soupape (4) pendant l'installation de la fixation de soupape (1) sur la soupape (3), et dans laquelle la boîtier (2) peut être fixé à l'adaptateur de soupape (4) dans une pluralité de positions axiales relatives, **caractérisée en ce que** la fixation de soupape (1) comprend un moyen d'indicateur (5) qui indique quand le moyen d'indicateur bute contre la soupape (3) et donc quand une position axiale relative correcte du boîtier (2) et de la soupape (3) est atteinte pendant l'installation.

2. Fixation de soupape (1) selon la revendication 1, **caractérisée en ce qu'**un moyen d'inspection est agencé dans le boîtier (2), dans laquelle le moyen d'inspection permet de voir depuis l'extérieur du boîtier (2) si le moyen d'indicateur (5) bute contre la soupape (2) ou non.

3. Fixation de soupape (1) selon la revendication 2, **caractérisée en ce que** le moyen d'indicateur (5) comprend un anneau indicateur (9) qui permet de voir à travers le moyen d'inspection si le moyen d'indicateur (5) bute contre la soupape (3) ou non.

4. Fixation de soupape (1) selon l'une quelconque des revendications 1 à 3, **caractérisée en ce que** le moyen d'indicateur (5) comprend une plaque de base (7) qui bute contre une tige de soupape (8) de la soupape (3).

5. Fixation de soupape (1) selon l'une quelconque des revendications 2 à 4, **caractérisée en ce que** le moyen d'indicateur (5) disparaît du moyen d'inspection une fois que le moyen d'indicateur (5) bute contre la soupape (3) pendant l'installation de la fixation de soupape (1) sur la soupape (3).

6. Fixation de soupape (1) selon l'une quelconque des revendications 2 à 4, **caractérisée en ce que** le moyen d'indicateur (5) apparaît dans le moyen d'inspection une fois que le moyen d'indicateur (5) bute contre la soupape (3) pendant l'installation de la fixation de soupape (1) sur la soupape (3).

7. Fixation de soupape (1) selon l'une quelconque des revendications 1 à 6, **caractérisée en ce que** la fixation de soupape (1) comprend un mécanisme de verrouillage (10) qui facilite un verrouillage de la position axiale relative du boîtier (2) sur l'adaptateur de soupape (4).

8. Fixation de soupape (1) selon la revendication 7, **caractérisée en ce que** le mécanisme de verrouillage (10) comprend un anneau de retenue (10A).

9. Fixation de soupape (1) selon l'une quelconque des revendications 1 à 8, **caractérisée en ce que** l'adaptateur de soupape (4) comprend une connexion d'adaptateur (11, 12) sur chaque extrémité axiale de l'adaptateur de soupape (4).

10. Fixation de soupape (1) selon la revendication 9, **caractérisée en ce que** les deux connexions d'adaptateur (11, 12) présentent une géométrie de connexion différente.

11. Fixation de soupape (1) selon l'une quelconque des revendications 1 à 10, **caractérisée en ce que** la fixation de soupape (1) comprend des profils d'encliquetage (13, 14) à la fois sur l'adaptateur de soupape (4) et le boîtier (2) afin de faciliter une fixation au boîtier (2) à l'adaptateur de soupape (4) dans une pluralité de positions axiales relatives.

12. Fixation de soupape (1) selon la revendication 11, **caractérisée en ce que** le mécanisme de verrouillage (10) engage au moins un des profils d'encliquetage (13, 14) afin de verrouiller la position axiale relative du boîtier (2) et de l'adaptateur de soupape (4).

13. Agencement de soupape comprenant une fixation de soupape (1) selon l'une quelconque des revendications 1 à 12, ainsi qu'une soupape (2) sur laquelle la fixation de soupape (1) est attachée.
